# EUROPÄISCHE PATENTSCHRIFT

(11) **EP 1 478 220 B1**
(45) Veröffentlichungstag und Bekanntmachung des Hinweises auf die Patenterteilung: **21.06.2006**
(21) Anmeldenummer: 03742517.0
(22) Anmeldetag: 13.02.2003
(51) Int. Cl.: A01C 5/06, A01C 5/08

(54) **TIEFENFÜHRUNGS- UND DRUCKROLLEN FÜR SÄMASCHINE**
DEPTH GUIDE CYLINDER AND PRESSING CYLINDER FOR A SEEDER
CYLINDRES DE GUIDAGE EN PROFONDEUR ET DE COMPRESSION DESTINÉS UNE SEMEUSE

(30) Priorität: 22.02.2002 DE 10207492; 22.06.2002 DE 10228020
(43) Veröffentlichungstag der Anmeldung: 24.11.2004
(73) Patentinhaber: Amazonen-Werke H. Dreyer GmbH & Co. KG, 49205 Hasbergen (DE)
(72) Erfinder: DREYER, Heinz, 49205 Hasbergen (DE)
(74) Vertreter: Grünecker, Kinkeldey, Stockmair & Schwanhäusser Anwaltssozietät
(86) Internationale Anmeldenummer: PCT/EP2003/001459
(87) Internationale Veröffentlichungsnummer: WO 2003/069973

(56) Entgegenhaltungen:
- EP-A- 0 588 095
- DE-B- 1 128 697
- US-A- 1 084 307
- US-A- 5 970 891
- US-A- 6 119 608

## Beschreibung

Die Erfindung betrifft eine Sämaschine gemäß des Oberbegriffes des Patentanspruches 1.

Eine derartige Sämaschine ist in der DE-OS 42 35 389 beschrieben. Bei dieser Sämaschine ist hinter jedem Säschar eine schräg zur Fahrtrichtung angestellte Tiefenführungsrolle angeordnet, welche beabstandet zueinander angeordnete Druckelemente aufweist. Diese Druckrolle hat sich bei dem Einsatz der Sämaschine im Direktsaatverfahren zur Einsaat auf unvorbereiteten, insbesondere festen schweren Böden bewährt. Bei dem Einsatz der Sämaschine mit dieser sogenannten Krallenrolle auf leichten, krümeligen, frostgaren Böden hat sich jedoch gezeigt, dass diese Rolle Dämme und Furchen erzeugt, so dass sich eine unebene Bodenoberfläche ergibt.

Auch aus der US 6 119 608 ist eine Sämaschine bekannt, bei der eine schräg zur Fahrtrichtung angestellte Tiefenführungsrolle neben dem Säschar angeordnet ist und zusätzlich hinter dem Säschar auf der anderen Seite der Furch bezüglich der Tiefenführungsrolle eine Furchenbedeckungsrolle angeordnet ist.

Der Erfindung liegt die Aufgabe zugrunde, mit einfachen Mitteln zu erreichen, dass der von dem Meißelsäschar aus die Säfurche seitlich des Säschlitzes zu Erddämmen aufgeworfene Boden wieder in die Säfurche zurückgeführt wird, um eine ebene Bodenoberfläche nach dem Sävorgang zu erreichen.

Diese Aufgabe wird von der Sämaschine gemäß Anspruch 1 erfindungsgemäß dadurch gelöst, dass jedem Säschar zwei Rollen, die in Draufsicht gesehen entgegengesetzt schräg und zu einem sich in Fahrtrichtung öffnenden V angestellt sind, angeordnet sind. Infolge dieser Maßnahme führen die schräg zur Fahrtrichtung angestellten Rollen das von den Säscharen aus der Säfurche geworfene Erdreich zumindest teilweise wieder in die Säfurche zurück und ebnen die Bodenunebenheiten ein.

Eine einfache Anordnung der Rollen, die jeweils einem Säschar zugeordnet sind, lässt sich in einfacher Weise dadurch erreichen, dass der Halterung für die Rollen eine Federeinrichtung zugeordnet ist.

Um auch auf steinigen und unebenen Böden keine Beschädigung an dem Säschar bzw. den Rollen auftreten zu lassen, ist vorgesehen, dass der Halterung für die Rollen eine Federeinrichtung zugeordnet ist.

Eine einfache Ausgestaltung der Rollen wird dadurch erreicht, dass die Rollen schalenförmig ausgebildet sind und einen umlaufenden Rand aufweisen.

Um zu verhindern, dass sich auch auf schwierigen Verhältnissen viel Boden auf den Rollen festsetzt, ist vorgesehen, dass der Rand der Rollen gezackt ausgebildet ist.

Um sicherzustellen, dass möglichst viel Erdreich, welches von den Säscharen seitlich der Säfurche aus der Säfurche geworfen wird, in diese zurückzuführen, ist vorgesehen, dass die Rollen derart zueinander angestellt sind, dass der vordere Öffnungsbereich eine größere Weite aufweist als das äußere Abstandsmaß der von dem Säschar aufgeworfenen Erddämme. Hierbei können die Rollen derart auf ihren Achswellen angeordnet sein, dass der Abstand zwischen ihnen einstellbar ist.

Um eine kompakte Bauweise von Säschar und den zugeordneten Rollen zu erreichen, ist vorgesehen, dass der Abstand zwischen der Hinterkante des Säschares und dem vorderen Aufstandsbereich der Rollen 10 bis 15 cm beträgt.

Eine besonders bevorzugte Ausführungsform von Säscharen sind Meißelsäschare. Es ist hier doch auch möglich, Einscheiben- oder Doppelscheibenschare zu setzen.

Um die Beschädigungsgefahr an dem Meißelsäschar, insbesondere auf steinigen Böden möglichst gering zu halten, ist vorgesehen, dass der vordere untere Bereich des Meißelsäschares derart geneigt nach hinten-unten verläuft, dass die Scharspitze gegenüber dem übrigen vorderen Bereich nacheilend ist.

Eine einfache Federung zwischen Säschar und Rollen wird dadurch erreicht, dass zwischen der Halterung für die Rollen und dem Säschar zumindest ein Gummifederelement angeordnet ist.

Eine vorteilhafte Anordnung der Rollen wird dadurch erreicht, dass die einem Säschar zugeordneten Rollen auf der in Fahrtrichtung gesehen hinteren Seite einen Abstand zueinander aufweisen, der zumindest etwa der Breite des Säschares entspricht.

Eine vorteilhafte Schrägstellung der Rollen, um insbesondere auch bei sehr leichten krümeligen Böden möglichst viel Boden in die Säfurche zurückzuführen, um eine ebene Bodenoberfläche zu erreichen, hat sich herausgestellt, dass das jede Rolle derart schräg zur Fahrtrichtung angestellt ist, dass in Draufsicht gesehen die Mittellinie des Rades mit der Fahrtrichtung einen Winkel zwischen 5° und 10°, vorzugsweise etwa 8° einschließt. Die Anordnung kann so getroffen sein, dass der Anstellwinkel je nach Einsatzbedingungen einstellbar ist.

Um eine gute Bodenförderung, sowie eine sichere Drehbewegung der Rollen sicherzustellen, ist vorgesehen, dass der Rand der Rollen im äußeren Bereich der Laufflächen nach außen umgebogen ist. Eine besonders gute Drehbewegung der Rollen wird dadurch erreicht, dass der umgebogene Bereich des Rades der Rollen gezackt ausgebildet ist.

Eine vorteilhafte Form der Zacken ergibt sich dadurch, dass die Zacken zumindest annähernd dreieckförmig oder trapezförmig ausgebildet sind.

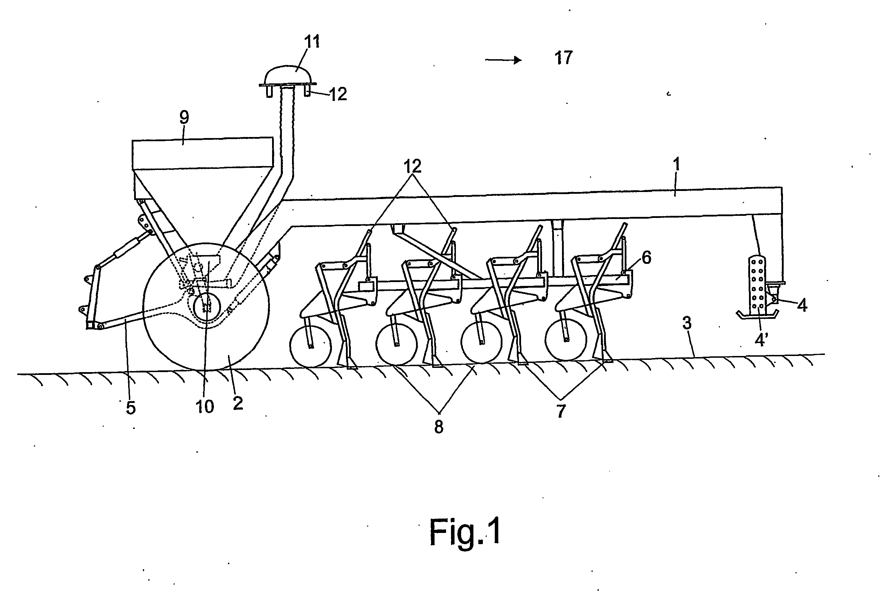

Weitere Einzelheiten der Erfindung sind den übrigen Unteransprüchen der Beispielsbeschreibung und der Zeichnung zu entnehmen. Hierbei zeigen
- Fig. 1.: die Sämaschine in Seitenansicht und Prinzipdarstellung,
- Fig. 2: das Säschar in Seitenansicht,
- Fig. 3: das Säschar in der Ansicht III - III,
- Fig. 4: das Säschar in der Vorderansicht,
- Fig. 5: das Säschar in Seitenansicht mit einer anders ausgebildeten Rollen,
- Fig. 6: das Säschar in der Ansicht VI - VI,
- Fig. 7: das Säschar in der Vorderansicht und
- Fig. 8: die Laufrolle in der Ansicht VIII- VIII.

Die Sämaschine zum Einsatz zur Direktsaat weist den langgestreckten Tragrahmen 1, der sich über Laufräder 2 auf dem Boden 3 abstützt, auf. Der Tragrahmen 1 weist auf seiner Vorderseite die Zug- und Kupplungseinrichtung 4 zum Ankuppeln an den Dreipunktkraftheber eines Ackerschleppers auf. An der Kupplungseinrichtung 4 können die höhenverstellbaren Abstellstützen 4' angeordnet sein. An der Rückseite des Tragrahmens 1 ist die mittels Hydraulikelemente hydraulisch anhebbare und absenkbare Kuppeleinrichtung 5 zum Ankuppeln von Arbeitswerkzeugen, z.B. von Striegeln, Reihenhacken etc. angeordnet. Vor den Laufrädern 2 sind an dem Tragrahmen 1 über die Trageinrichtung 6 die Meißelsäschare 7 mit den Rollen 8 angeordnet, die die Meißelsäschare in ihrer Tiefe in den Boden führen. Der Vorratsbehälter 9 befindet sich zwischen und oberhalb der Laufräder 2. Über eine pneumatische Förder- und Dosiereinrichtung 10 wird das sich im Vorratsbehälter 9 befindliche Saatgut den Säscharen 8 über den Verteilerköpfen 11 und den Saatleitungen 12 zugeführt.

Die Meißelsäschare sind über die Parallelogrammhalterungen 13 an den Tragelementen 6 angeordnet. Die parallelogrammartige Halterung 13 weist eine zweigeteilte obere Strebe 14 auf, die über ein Gelenk 15 miteinander verbunden sind. Mittels der Zugfeder 16 werden diese Streben 14 in gestreckter Stellung gehalten. Im Ausführungsbeispiel weist das Meißelsäschar 7 eine auf Griff stehende Spitze 16 auf. Es ist jedoch auch möglich, dass der vordere untere Bereich des Meißelsäschares 7 derart geneigt nach hinten unten verläuft, dass die Scharspitze gegenüber dem übrigen vorderen Bereichen nacheilend ist.

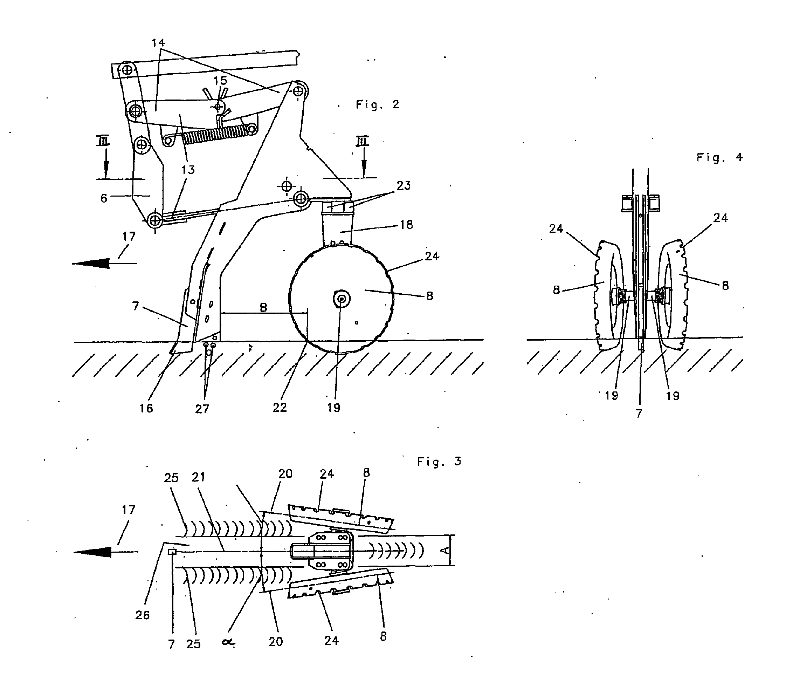

Jedem Meißelsäschar 7 sind zwei Tiefenführungsrollen 8 zugeordnet, die in Draufsicht gesehen, wie die Fig. 3 zeigt, entgegengesetzt schräg und zu einem sich in Fahrtrichtung 17 öffnenden V gestellt sind, angeordnet. Die beiden Rollen sind mittels einer zwischen den Rollen 8 angeordneten Halterung 18 an dem Schar 7 befestigt. Die Rollen 8 sind auf ihren Achswellen 19 verstellbar angeordnet, so dass unterschiedliche Abstände der beiden Rollen 8 zueinander einstellbar sind. Die Rollen 8 sind derart schräg zur Fahrtrichtung 17 angestellt, dass in Draufsicht gesehen die Mittellinie 20 der Rolle 8 mit der Fahrtrichtung 17 liegenden Geraden 21 einen Winkel α zwischen 5° und 10°, vorzugsweise etwa 8° einschließt. Die einem Säschar zugeordneten Rollen 8 sind mit einem derartigen Abstand zueinander angeordnet, dass sie auf der in Fahrtrichtung 17 hinteren Seite einen Abstand A aufweist, der zumindest etwa der Breite des Säschares entspricht. Die Aufstandsfläche 22 der Rollen 8 weisen einen Abstand B zur Rückseite des Säschares von 10 -15 cm auf.

Die zwischen der Halterung 18, an der die Rollen 8 angeordnet sind und dem Säschar 7 ist eine federnde Verbindung 23 vorgesehen. Hierzu sind zwischen der Halterung 18 für die Rollen 8 und dem Säschar 7 ein oder mehrere Gümmifederelemente 23 angeordnet.

Die Rollen 8 sind schalenförmig ausgebildet und weisen einen umlaufenden Rand 24 auf. Der Rand 24 der Rollen 8 ist in bevorzugter Weise gezackt ausgebildet, wie die Fig. 2 bis 4 zeigen. In manchen Fällen kann es sinnvoll sein, dass der Rand 24 der Rollen 8 Erhebungen aufweist.

Die Rollen 8 sind derart zueinander angestellt, dass der vordere Öffnungsbereich eine größere Weite aufweist, als das äußere Abstandsmaß der von dem Säschar 7 aufgeworfenen Erddämme 25. Die Rollen 8 sind jeweils seitlich nach hinten versetzt zu dem Säschar 7 angeordnet. Der Abstand B zwischen der Hinterkante des Säschares 7 und dem vorderen Aufstandsbereich 22 der Rollen 8 beträgt 10 cm bis 15 cm.

Die Funktionsweise des Säschares 7 mit den Rollen 8 ist folgende:

Insbesondere beim Einsatz auf leichten, krümeligen und humusartigen Böden wird Erdreich in größeren Mengen von dem Säschar 7 beim Reißen einer Säfurche 26 in den Boden seitlich der Säfurche 26 als Erddämme 25 abgelegt. Dieses Erdreich kann ohne weitere Maßnahmen nicht in die Säfurche 26 zurückgeführt werden, so dass Erddämme 25 entstehen. Um dieses zu vermeiden und um das von den Säscharen 7 in dem Boden abgelegte Saatgut 27 und/oder Düngemittel mit Erdreich zu bedecken und die Säfurche 26 wieder zu schließen, wird der von dem Säschar 7 seitlich der Furche 26 aufgeworfene Boden von den V-förmig sich nach vom öffnenden Rollen 8 wieder in die Säfurche 26 zurückgeführt, wie dies Fig. 3 zeigt. Die sich nach vom öffnenden Rollen 8 fangen quasi das Erdreich ein und leiten es in die Säfurche 26 zurück.

Es sei noch darauf hingewiesen, dass an Stelle der aus Metall bestehenden schalenartig ausgebildeten Rollen 8 auch Rollen mit einem umlaufenden Walkgummibereich zum Einsatz kommen können. Dieses ist insbesondere auf schmierigen Böden von Vorteil, da die Walkgummireifen eine Selbstreinigung der Rollen bewirken.

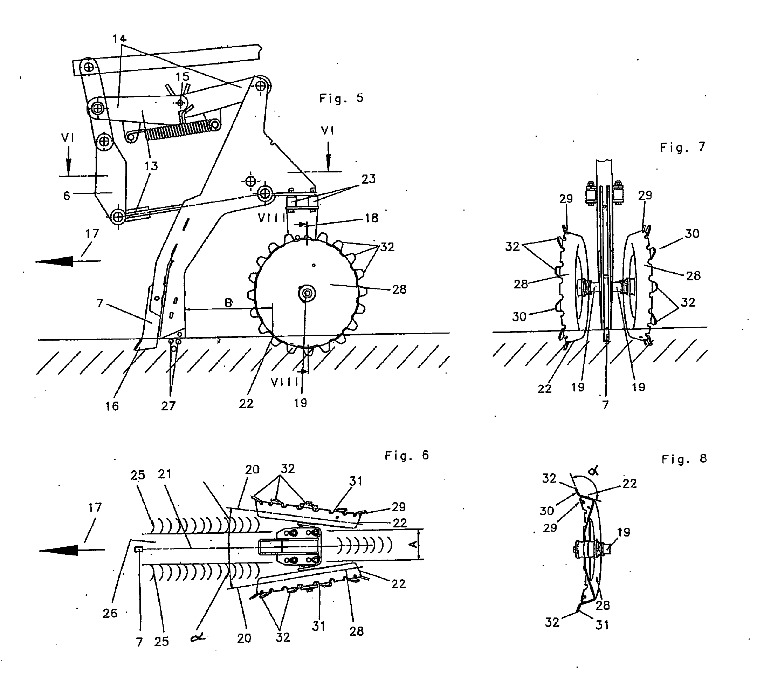

Das Säschar gemäß den Fig. 5 und folgende entspricht bis auf der anderen Ausbildung der Laufrolle dem Säschar gemäß den Fig. 2 bis 4. An Stelle der Laufrolle 8 ist diesem Säschar die Fig. 5 und folgende die Laufrolle 28 zugeordnet. Die Laufrolle 28 weist ein im äußeren Bereich der Lauffläche nach außen umgebogenen Bereich auf. Dieser Bereich ist unter einem Winkel von 120° bis 160°, vorzugsweise 135° zur Lauffläche umgebogen bzw. abgekantet. Dieser Bereich weist schräg nach außen. Der umgebogene Bereich des Rades der Rollen ist gezackt ausgebildet, wie die Fig. 5 bis 8 zeigen. Die Zacken weisen schräg nach außen. Die Zacken besitzen eine dreieckförmige bzw. trapezförmige Ausgestaltung. Durch den Eingriff der Zacken in den Boden ist eine sichere Drehbewegung der Rollen sichergestellt. Der Lauffläche der Rollen kann ein nicht dargestellter Abstreifer zur Abstreifung von sich auf der Lauffläche festsitzenden Boden angeordnet sein. Die Funktionsweise der Rollen 5 bis 8 entspricht den Rollen gemäß Fig. 2 bis 4.

## Patentansprüche

1. Sämaschine zum Ausbringen von Saatgut und/oder Düngemitteln mit einem Rahmen (1), Vorratsbehälter (9), Säscharen (7) und hinter den Säscharen (7) und an diesen angeordneten sowie schräg zur Fahrtrichtung angestellten Tiefenführungsrollen (8), **dadurch gekennzeichnet, dass** jedem Säschar (7) zwei Tiefenführungsrollen (8), die in Draufsicht gesehen entgegengesetzt schräg und zu einem sich in Fahrtrichtung (17) öffnenden V angestellt sind, zugeordnet sind.

2. Sämaschine nach Anspruch 1, **dadurch gekennzeichnet, dass** die einem Schar (7) zugeordneten Rollen (8) mittels einer zwischen den Rollen (8) angeordneten Halterung (18) an dem Schar (7) befestigt sind.

3. Sämaschine nach einem oder mehreren der vorstehenden Ansprüche, **dadurch gekennzeichnet, dass** der Halterung (18) für die Rollen (8) eine Federeinrichtung (23) zugeordnet ist.

4. Sämaschine nach einem oder mehreren der vorstehenden Ansprüche, **dadurch gekennzeichnet, dass** die Rollen (8) schalenförmig ausgebildet sind und einen umlaufenden Rand (24) aufweisen.

5. Sämaschine nach einem oder mehreren der vorstehenden Ansprüche, **dadurch gekennzeichnet, dass** der Rand (24) der Rollen (8) gezackt ausgebildet ist.

6. Sämaschine nach einem oder mehreren der vorstehenden Ansprüche, **dadurch gekennzeichnet, dass** der Rand (24) der Rollen (8) Erhebungen aufweist.

7. Sämaschine nach einem oder mehreren der vorstehenden Ansprüche, **dadurch gekennzeichnet, dass** die Rollen (8) derart zueinander angestellt sind, dass der vordere Öffnungsbereich eine größere Weite aufweist als das äußere Abstandsmaß der von dem Säschar (7) aufgeworfenen Erddämme (25).

8. Sämaschine nach einem oder mehreren der vorstehenden Ansprüche, **dadurch gekennzeichnet, dass** jeweils eine Rolle (8) seitlich nach hinten versetzt zum Säschar (7) angeordnet ist.

9. Sämaschine nach einem oder mehreren der vorstehenden Ansprüche, **dadurch gekennzeichnet, dass** der Abstand (B) zwischen der Hinterkante des Säschares (7) und dem vorderen Aufstandsbereich (22) der Rollen (8) 10 bis 15 cm beträgt.

10. Sämaschine nach einem oder mehreren der vorstehenden Ansprüche, **dadurch gekennzeichnet, dass** die Säschare (7) als Meißelschare ausgebildet sind.

11. Sämaschine nach Anspruch 10, **dadurch gekennzeichnet, dass** der vordere untere Bereich des Meißelsäschares (7) derart geneigt nach hinten-unten verläuft, dass die Scharspitze (16) gegenüber dem übrigen vorderen Bereich nacheilend ist.

12. Sämaschine nach einem oder mehreren der vorstehenden Ansprüche, **dadurch gekennzeichnet, dass** zwischen der Halterung (18) für die Rollen (8) und dem Säschar (7) zumindest ein Gummifederelement (23) angeordnet ist.

13. Sämaschine nach einem oder mehreren der vorstehenden Ansprüche, **dadurch gekennzeichnet, dass** die einem Säschar (7) zugeordneten Rollen (8) auf der in Fahrtrichtung (17) hinteren Seite einen Abstand (A) zueinander aufweisen, der zumindest etwa der Breite des Säschares (7) entspricht.

14. Sämaschine nach einem oder mehreren der vorstehenden Ansprüche, **dadurch gekennzeichnet, dass** das jede Rolle (8) derart schräg zur Fahrtrichtung (17) angestellt ist, dass in Draufsicht gesehen die Mittellinie (20) des Rades (8) mit der Fahrtrichtung (17) verlaufenden Geraden (21) einen Winkel (α) zwischen 5° und 10°, vorzugsweise etwa 8° einschließt.

15. Sämaschine nach einem oder mehreren der vorstehenden Ansprüche, **dadurch gekennzeichnet, dass** der Rand der Rollen im äußeren Bereich der Lauffläche nach außen umgebogen ist.

16. Sämaschine nach einem oder mehreren der vorstehenden Ansprüche, **dadurch gekennzeichnet, dass** der Rand unter einem Winkel von 120° bis 160°, vorzugsweise etwa 135° zur Lauffläche umgebogen bzw. abgekantet und schräg nach außen weisend angeordnet ist.

17. Sämaschine nach einem oder mehreren der vorstehenden Ansprüche, **dadurch gekennzeichnet, dass** zumindest der umgebogene Bereich des Rades der Rollen gezackt ausgebildet ist.

18. Sämaschine nach einem oder mehreren der vorstehenden Ansprüche, **dadurch gekennzeichnet, dass** die Zacken schräg nach außen weisen.

19. Sämaschine nach einem oder mehreren der vorstehenden Ansprüche, **dadurch gekennzeichnet, dass** die Zacken zumindest annähernd dreieckförmig oder trapezförmig ausgebildet sind.

20. Sämaschine nach einem oder mehreren der vorstehenden Ansprüche, **dadurch gekennzeichnet, dass** zwischen den Zacken sich ein Zwischenraum befindet, der zumindest die Breite der Zacken aufweist.

## Claims

1. Seed drill for delivering seed material and/or fertiliser means, said seed drill having a frame (1), hopper (9), sowing coulters (7) and, behind the Sowing coulters (7), depth guide rollers (8) that are disposed on said sowing coulters and are set inclinedly relative to the direction of travel, **characterised in that** two depth guide rollers (8) are associated with each sowing coulter (7), said depth guide rollers, when viewed in plan from above, being set opposite one another inclinedly and forming a V that opens out in the direction of travel.

2. Seed drill according to claim 1, **characterised in that** the rollers (8) that are associated with one coulter (7) are secured to the said coulter through the intermediary of a mounting (18) that is disposed between the rollers (8).

3. Seed drill according to one or more of the preceding claims, **characterised in that** a resilient device (23) is associated with the mounting (18) for the rollers (8).

4. Seed drill according to one or more of the preceding claims, **characterised in that** the rollers (8) are shell-shaped and include a circumferential edge (24).

5. Seed drill according to one or more of the preceding claims, **characterised in that** the edge (24) of the rollers (8) is serrated.

6. Seed drill according to one or more of the preceding claims, **characterised in that** the edge (24) of the rollers (8) includes projections.

7. Seed drill according to one or more of the preceding claims, **characterised in that** the rollers (8) are set one relative to another in such a manner that the width of the front opening region is greater than the outer dimension of the earth bank (25) thrown up by the sowing coulter (7).

8. Seed drill according to one or more of the preceding claims, **characterised in that** in each case one roller (8) is disposed offset laterally to the rear of the sowing coulter (7).

9. Seed drill according to one or more of the preceding claims, **characterised in that** the distance (B) between the rear edge of the sowing coulter (7) and the front contact region (22) of the rollers (8) is between 10 and 15 cm.

10. Seed drill according to one or more of the preceding claims, **characterised in that** the sowing coulters (7) are in the form of chisel coulters.

11. Seed drill according to claim 10, **characterised in that** the front lower region of the chisel sowing coulter (7) extends inclinedly rearwards and downwards in such a manner that the tip (16) of the coulter lags behind the rest of the front region.

12. Seed drill according to one or more of the preceding claims, **characterised in that** at least one rubber resilient element (23) is disposed between the mounting (18) for the rollers (8) and the sowing coulter (7).

13. Seed drill according to one or more of the preceding claims, **characterised in that** the rollers (8) associated with one sowing coulter (7) are spaced apart by a distance (A) at the rear end when viewed in the direction of travel (17), said distance (A) corresponding at least approximately to the width of the sowing coulter (7).

14. Seed drill according to one or more of the preceding claims, **characterised in that** each roller (8) is set in such a manner inclinedly relative to the direction of travel (17) that, when seen in plan view from above, there is an angle (α) between 5° and 10°, preferably approximately 8°, between the central line (20) of the wheel (8) and the straight line (21) that extends in the direction of travel (17).

15. Seed drill according to one or more of the preceding claims, **characterised in that** the edge of the rollers is curved round outwards in the outer region of the running surface.

16. Seed drill according to one or more of the preceding claims, **characterised in that** the edge is curved round or respectively bevelled at an angle of between 120° and 160°, preferably approximately 135° and is disposed pointing inclinedly outwards.

17. Seed drill according to one or more of the preceding claims, **characterised in that** at least the curved-round region of the wheel of the roller is serrated.

18. Seed drill according to one or more of the preceding claims, **characterised in that** the serrations point inclinedly outwards.

19. Seed drill according to one or more of the preceding claims, **characterised in that** the serrations are at least approximately triangular or trapezoidal.

20. Seed drill according to one or more of the preceding claims, **characterised in that** between the serrations there is an intermediate space that is at least the width of the serrations.

## Revendications

1. Semoir pour distribuer des semences et/ou des engrais comprenant un châssis (1), un réservoir (9), des socs de semoir (7) et derrière les socs de semoir (7), portés par ceux-ci, des roues de jauge (8) disposées en biais par rapport à la direction de déplacement,
**caractérisé en ce qu'**
à chaque soc de semoir (7) sont associées deux roues de jauge (8) qui, en vue de dessus, sont inclinées l'une vers l'autre et font un angle V ouvert dans la direction de déplacement (17).

2. Semoir selon la revendication 1,
**caractérisé en ce que**
les roues de jauge (8) associées à un soc (7) sont fixées au soc (7) par l'intermédiaire d'un support (18) installé entre les roues (8).

3. Semoir selon une ou plusieurs des revendications précédentes,
**caractérisé en ce que**
le support (18) des roues de jauge (8) comporte une installation à ressorts (23).

4. Semoir selon une ou plusieurs des revendications précédentes,
**caractérisé en ce que**
les roues de jauge (8) sont en forme de coupelle avec un bord (24) périphérique.

5. Semoir selon une ou plusieurs des revendications précédentes,
**caractérisé en ce que**
le bord (24) des roues de jauge (8) est dentelé.

6. Semoir selon une ou plusieurs des revendications précédentes,
**caractérisé en ce que**
le bord (24) des roues de jauge (8) comporte des bossages.

7. Semoir selon une ou plusieurs des revendications précédentes,
**caractérisé en ce que**
les roues (8) sont disposées l'une par rapport à l'autre pour que la zone d'ouverture avant soit plus grande que l'écartement extérieur des talus de terre (25) éjectés par le soc de semoir (7).

8. Semoir selon une ou plusieurs des revendications précédentes,
**caractérisé en ce que**
chaque roue de jauge (8) est décalée latéralement vers l'arrière par rapport au soc de semoir (7).

9. Semoir selon une ou plusieurs des revendications précédentes,
**caractérisé en ce que**
la distance (B) entre l'arête arrière du soc de semoir (7) et la zone d'appui avant (22) des roues de jauge (8) est de 10 à 15 cm.

10. Semoir selon une ou plusieurs des revendications précédentes,
**caractérisé en ce que**
les socs de semoir (7) sont des socs en forme de tranchant.

11. Semoir selon la revendication 10,
**caractérisé en ce que**
la zone inférieure avant du soc de semoir en forme de tranchant (7) est inclinée vers le bas et l'arrière pour que la pointe (16) du soc soit en aval de la partie avant restante.

12. Semoir selon une ou plusieurs des revendications précédentes,
**caractérisé par**
au moins un élément de ressort élastique (23) entre le support (18) des roues de jauge (8) et le soc de semoir (7).

13. Semoir selon une ou plusieurs des revendications précédentes,
**caractérisé en ce que**
les roues de jauge (8) associées à un soc de semoir (7) sont écartées sur leur côté arrière, selon le sens de déplacement (17), d'une distance (A) qui correspond au moins sensiblement à la largeur du soc de semoir (7).

14. Semoir selon une ou plusieurs des revendications précédentes,
**caractérisé en ce que**
chaque roue de jauge (8) est inclinée par rapport à la direction de déplacement (17) et en vue de dessus, la ligne médiane (20) de la roue de jauge (8) fait avec la droite (21) correspondant à la direction de déplacement (17), un angle (α) compris entre 5° et 10° de préférence de l'ordre de 8°.

15. Semoir selon une ou plusieurs des revendications précédentes,
**caractérisé en ce que**
le bord des roues, au niveau de la périphérie de la surface de roulement, est recourbé vers l'extérieur.

16. Semoir selon une ou plusieurs des revendications précédentes,
**caractérisé en ce que**
le bord est recourbé ou replié d'un angle de 120° à 160°, de préférence d'environ 135°, par rapport à la surface de roulement et est dirigé en biais vers l'extérieur.

17. Semoir selon une ou plusieurs des revendications précédentes,
**caractérisé en ce qu'**
au moins la zone recourbée de la roue est dentelée.

18. Semoir selon une ou plusieurs des revendications précédentes,
**caractérisé en ce que**
les dents sont dirigées en biais vers extérieur

19. Semoir selon une ou plusieurs des revendications précédentes,
**caractérisé en ce que**
les dents ont au moins sensiblement une forme triangulaire ou trapézoïdale.

20. Semoir selon une ou plusieurs des revendications précédentes,
**caractérisé par**
un intervalle entre les dents qui correspond au moins à la largeur des dents
